(19) Europäisches Patentamt
European Patent Office
Office européen des brevets

(11) **EP 4 412 322 A1**

(12) **EUROPEAN PATENT APPLICATION**
published in accordance with Art. 153(4) EPC

(43) Date of publication:
**07.08.2024  Bulletin 2024/32**

(21) Application number: **22876955.0**

(22) Date of filing: **30.09.2022**

(51) International Patent Classification (IPC):
**H04W 52/32** $^{(2009.01)}$     **H04W 52/14** $^{(2009.01)}$
**H04W 52/54** $^{(2009.01)}$     **H04L 1/18** $^{(2023.01)}$

(52) Cooperative Patent Classification (CPC):
**H04L 1/18; H04W 52/14; H04W 52/32; H04W 52/54**

(86) International application number:
**PCT/KR2022/014785**

(87) International publication number:
**WO 2023/055184 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021  KR 20210129942**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR PERFORMING UPLINK TRANSMISSION AND RECEPTION IN WIRELESS COMMUNICATION SYSTEM**

(57)     A method and device for performing uplink transmission and reception in a wireless communication system are disclosed. A method by which a terminal performs uplink transmission according to one embodiment of the present disclosure comprises the steps of: on the basis of total transmit power for a first uplink transmission and a second uplink transmission exceeding a threshold value, preferentially allocating first transmit power to the first uplink transmission within the threshold value; and performing the first uplink transmission in a specific TO on the basis of the first transmit power, wherein the first uplink transmission and the second uplink transmission overlap in the specific TO, and the first uplink transmission may include a PUCCH including ACK/NACK-based HARQ-ACK information, and the second uplink transmission may include a PUCCH including NACK only-based HARQ-ACK information.

**FIG.7**

BASED ON THE TOTAL TRANSMISSION POWER FOR THE FIRST UPLINK TRANSMISSION AND THE SECOND UPLINK TRANSMISSION EXCEEDING THE THRESHOLD, PREFERENTIALLY ALLOCATING THE FIRST TRANSMISSION POWER TO THE FIRST UPLINK TRANSMISSION WITHIN THE THRESHOLD — S710

PERFORMING THE FIRST UPLINK TRANSMISSION IN A SPECIFIC TO BASED ON THE FIRST TRANSMISSION POWER — S720

EP 4 412 322 A1

**Description**

[TECHNICAL FIELD]

The present disclosure relates to a wireless communication system, and more specifically to a method and device for performing uplink transmission and reception in a wireless communication system.

[BACKGROUND]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

In addition, an additional technical problem of the present disclosure is to provide a method and apparatus for allocating transmission power to a plurality of uplink channels and/or signals according to priority when multiple uplink channels and/or signals overlap and the overall UE transmission power is configured.

In addition, an additional technical problem of the present disclosure is to provide a method and device for controlling transmission power of PUCCH including multicast HARQ-ACK.

In addition, an additional technical problem of the present disclosure is to provide a method and device for transmitting and receiving downlink control information (DCI) for multicast HARQ-ACK including a transmit power control (TPC) command.

The technical problems to be achieved by the present disclosure are not limited to the above-described technical objects, and other technical problems which are not described herein will be clearly understood by those skilled in the pertinent art from the following description.

[Technical Solution]

According to an embodiment of the present disclosure, a method of performing uplink transmission by a user equipment (UE) in a wireless communication system may include based on total transmission power for first uplink transmission and second uplink transmission exceeding a threshold, allocating first transmission power to the first uplink transmission preferentially within the threshold; and performing the first uplink transmission at a specific transmission occasion (TO) based on the first transmission power, and the first uplink transmission and the second uplink transmission may be overlapped in the specific TO, and the first uplink transmission may include a physical uplink control channel (PUCCH) including acknowledgment (ACK)/negative acknowledgment (NACK)-based hybrid automatic repeat request (HARQ)-ACK information, and the second uplink transmission may include a PUCCH including NACK only based HARQ-ACK information.

According to another embodiment of the present disclosure, a method of performing uplink reception by a base station in a wireless communication system may include transmitting, to a user equipment (UE), first control information related to first uplink transmission and second control information related to second uplink transmission; and receiving, from the UE, the first uplink transmission based on first transmission power at a specific transmission occasion (TO), and based on the total transmission power for the first uplink transmission and the second uplink transmission exceeding a threshold, the first transmission power may be preferentially allocated to the first uplink transmission within the threshold, and the first uplink transmission and the second uplink transmission may be overlapped in the specific TO, and the first uplink transmission may include a physical uplink control channel (PUCCH) including acknowledgment (ACK)/negative acknowledgment (NACK)-based hybrid automatic repeat request (HARQ)-ACK information, and the second uplink transmission may include a PUCCH including NACK only based HARQ-ACK information.

[Technical Effects]

According to an embodiment of the present disclosure, a method and device for performing uplink transmission and reception in a wireless communication system may be provided.
In addition, according to an embodiment of the present disclosure, a method and apparatus for allocating transmission power to a plurality of uplink channels and/or signals according to priority may be provided when multiple uplink channels and/or signals overlap and the overall terminal transmission power is configured.
In addition, according to an embodiment of the present disclosure, a method and device for controlling transmission power of PUCCH including multicast HARQ-ACK may be provided.
In addition, according to an embodiment of the present disclosure, a method and device for transmitting and receiving downlink control information (DCI) for multicast HARQ-ACK including a transmit power control (TPC) command may be provided.
In addition, according to an embodiment of the present disclosure, when two or more uplink channels and/or signals including multicast HARQ-ACK are transmitted overlapping, transmission power may be effectively allocated to each uplink channel and/or signal within the total UE transmission power.
Effects achievable by the present disclosure are not limited to the above-described effects, and other effects which are not described herein may be clearly understood by those skilled in the pertinent art from the following description.

[Best Mode]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing an uplink transmission operation of a terminal in a wireless communication system to which the present disclosure may be applied.
FIG. 8 is a diagram for describing an uplink reception operation of a base station in a wireless communication system to which the present disclosure may be applied.
FIG. 9 is a diagram illustrating a process for receiving a unicast/multicast downlink channel transmitted in FDM/TDM in a wireless communication system to which the present disclosure may be applied.
FIG. 10 is a flowchart illustrating a method of determining transmission power for uplink transmission in a wireless communication system to which the present disclosure can be applied.
FIG. 11 illustrates the format of PUCCH spatial relationship activation/deactivation MAC CE according to an embodiment of the present disclosure.
FIG. 12 is a diagram for describing the signaling procedure of the network side and the terminal according to an embodiment of the present disclosure.
FIG. 13 illustrates a block diagram of a wireless communication device according to an embodiment of the present disclosure.

[Best mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

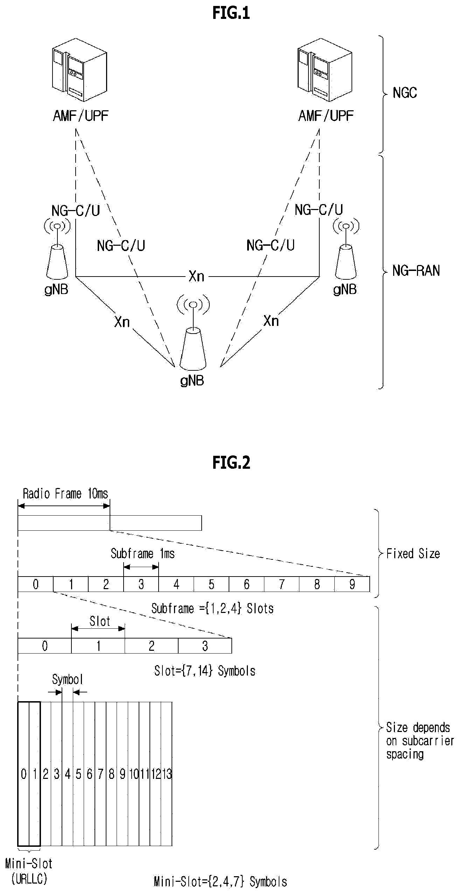

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10$ms. Here, a radio frame is configured with 10 subframes having a duration of $T_{sf}=(\Delta f_{max}N_f/1000)\cdot T_c=1$ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame

($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

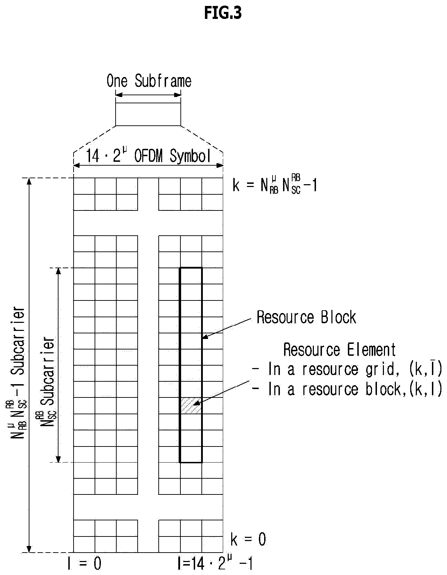

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

- absoluteFrequencyPointA represents a frequency-position of point A expressed as in ARFCN (absolute radio-frequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following

Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

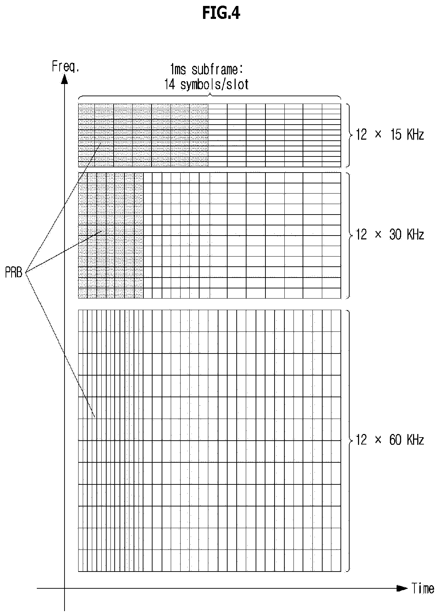

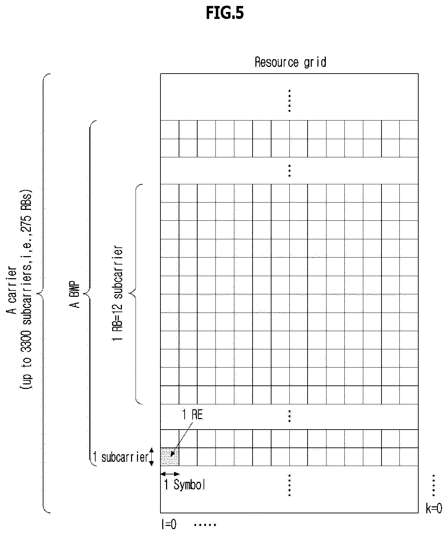

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing.

Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP.

But, a configuration on a DL/UL BWP may not be received when a terminal performs an initial access procedure or before a RRC connection is set up, so a DL/UL BWP which is assumed by a terminal under these situations is defined as an initial active DL/UL BWP.

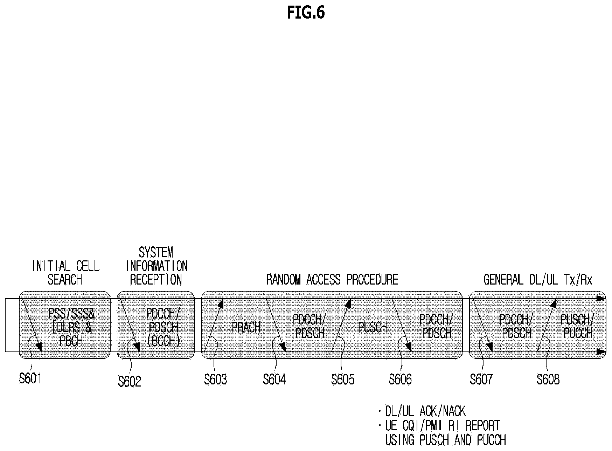

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Uplink power control method

In a wireless communication system, it may be necessary to increase or decrease the transmission power of the UE depending on network conditions, etc. In the present disclosure, the method of controlling the transmission power of the UE may be referred to as an uplink power control method.

For example, the transmission power control method may be applied to the UE to satisfy the requirements of the base station (e.g., Signal-to-Noise Ratio (SNR), Bit Error Ratio (BER), Block Error Ratio (BLER), etc.)

The power control method described above may include an open-loop power control method and a closed-loop power control method.

Specifically, the open loop power control method refers to a method of controlling transmission power without feedback from a transmitting device (e.g., base station, etc.) to a receiving device (e.g., UE, etc.) and/or without feedback from the receiving device to the transmitting device.

For example, the UE may receive a specific channel/signal (pilot channel/signal) from the base station and use this to estimate the strength of the received power. Afterwards, the UE may control the transmission power using the intensity of the estimated received power.

And, the closed-loop power control method refers to a method of controlling transmission power based on feedback from the transmitting device to the receiving device and/or feedback from the receiving device to the transmitting device.

For example, the base station may receive a specific channel/signal from the UE and may determine the optimal power level of the UE based on the power level, SNR, BER, BLER, etc. measured by the received specific channel/signal.

The base station may transmit information (i.e., feedback) about the determined optimal power level to the terminal through a control channel, etc., and the UE may control transmission power using the feedback provided by the base station.

MBMS(multimedia broadcast/multicast service) Scheme

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service.

And, for a specific service/specific G-RNTI, SC-PTM dedicated DRX on-duration period may be configured, and in this case, the UEs may wake up only for a specific on-duration period and perform PDCCH monitoring for the G-RNTI.

MBS (multicast broadcast service) based transmission / reception operation

In a basic wireless communication system, the base station sets UE-specific SPS(semi-persistent scheduling) configuration information to a specific terminal, so that a downlink (DL) SPS transmission resource that is repeated according to a configured period may be allocated to a specific terminal. In this case, the DCI transmitted through the UE-dedicated PDCCH indicates activation of a specific SPS configuration index (SPS activation), thereby indicating the corresponding terminal to repeatedly receive the SPS transmission resource according to a configured period.

This initial SPS transmission resource may be used for initial HARQ transmission, and the base station may allocate a retransmission resource of a specific SPS configuration index through DCI transmitted through a UE-dedicated PDCCH. For example, when the terminal reports a HARQ negative acknowledgment (NACK) for the SPS transmission resource, the base station may allocate the retransmission resource to DCI so that the terminal may receive the DL retransmission.

And, the DCI transmitted through the UE-dedicated PDCCH may indicate deactivation (SPS release or SPS deactivation) of a specific SPS configuration index, and in this case, the corresponding UE may not receive the indicated SPS transmission resource. Here, the CRC of the DCI for the activation/retransmission/deactivation may be scrambled with a CS-RNTI (Configured Scheduling RNTI).

In a wireless communication system (e.g., NR), a DL broadcast or DL multicast transmission scheme for supporting an MBS similar to the above-described MBMS may be applied. The base station may provide a point-to-multipoint (PTM) transmission scheme and a point-to-point (PTP) transmission scheme for DL broadcast or DL multicast transmission.

In the PTM transmission scheme for MBS, the base station may transmit a group common PDCCH and a group common PDSCH to a plurality of terminals, and a plurality of UEs may simultaneously receive the same group common PDCCH and group common PDSCH transmission and decode the same MBS data.

In addition, in the PTP transmission scheme for MBS, the base station may transmit the UE-dedicated PDCCH and the UE-dedicated PDSCH to a specific UE, and only the corresponding UE may receive the UE-dedicated PDCCH and the UE-dedicated PDSCH. Here, when there are a plurality of UEs receiving the same MBS service, the base station may separately transmit the same MBS data to individual UEs through different UE-dedicated PDCCHs and UE-dedicated PDSCHs.

In the PTM transmission method, the base station may transmit a plurality of group common PDSCHs to UEs. At this time, the base station can receive the UE's HARQ-ACK for the group common PDSCH through the UE-dedicated PUCCH resource.

At this time, if the TB (Transport Block) for the group common PDSCH is successfully decoded, the UE may transmit ACK with HARQ-ACK information. If the TB for the unicast PDSCH is not successfully decoded, the UE may transmit NACK as HARQ-ACK information. This HARQ-ACK transmission method may be referred to as ACK/NACK-based HARQ-ACK. The UE may transmit ACK/NACK-based HARQ-ACK using UE-dedicated PUCCH resources.

As another example, assume that a NACK-only based HARQ-ACK method is configured for a group common PDSCH. The UE may not perform PUCCH transmission in a situation where ACK must be transmitted. And, the UE may perform PUCCH transmission only in situations where NACK must be transmitted. Here, the UE may transmit HARQ-ACK information including NACK through PUCCH using group common PUCCH resources.

Since multicast HARQ-ACK transmission is not supported in the unicast transmission method of the basic wireless communication system, it may not be clear how to determine PUCCH transmission power for multicast HARQ-ACK.

For example, when NACK only-based HARQ-ACK transmission is configured and multiple UEs in the group transmit HARQ-ACK to the same PUCCH resource, and when the UE receives a TPC command for multicast HARQ-ACK transmission according to the group common DCI, the method of determining PUCCH transmission power for a specific UE may not be clear.

Hereinafter, when multicast HARQ-ACK information is transmitted on PUCCH or PUSCH based on group common DCI, or when multiple terminals transmit HARQ-ACK (e.g., NACK only-based HARQ-ACK) on the same PUCCH resource, the method for determining the transmission power of PUCCH will now be described.

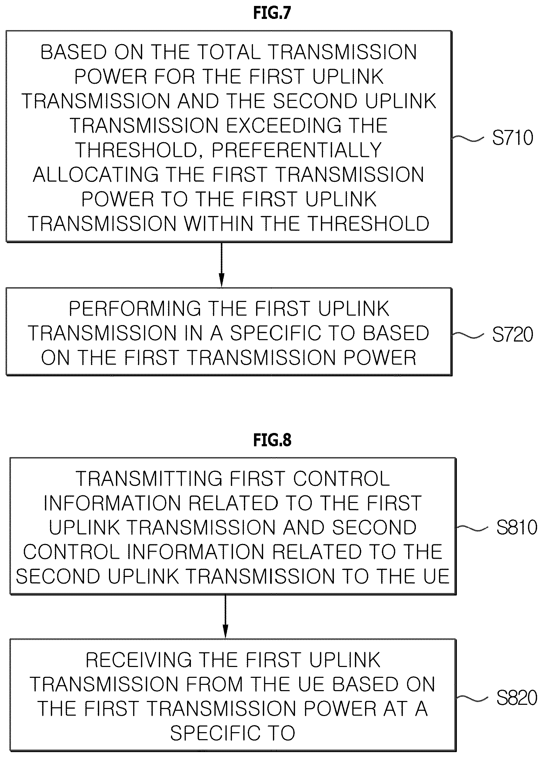

FIG. 7 is a diagram for describing an uplink transmission operation of a UE in a wireless communication system to which the present disclosure may be applied.

Based on the total transmission power for the first uplink transmission and the second uplink transmission exceeding the threshold, the UE may preferentially allocate the first transmission power to the first uplink transmission within the threshold(S710).

Here, the first uplink transmission and the second uplink transmission may overlap at a specific transmission occasion (TO). As another example, the first uplink transmission and the second uplink transmission may overlap at a specific TO in a plurality of cells with carrier aggregation.

A specific TO may include a specific slot or specific symbol in which the first uplink transmission and the second uplink transmission are performed. For example, the first uplink transmission and the second uplink transmission may directly overlap (that is, the symbol through which each uplink is transmitted (e.g., the specific symbol) is the same). As another example, the first uplink transmission and the second uplink transmission may indirectly overlap (that is, the slot in which each uplink is transmitted (e.g., the specific slot) is the same, but the transmitted symbol is different).

The threshold may include a linear value of the configured maximum UE output power configured in a specific TO. And, the total transmission power for the first uplink transmission and the second uplink transmission may be the sum of the initial transmission power that can be determined / configured for each of the first uplink transmission and the second uplink transmission in a specific TO.

For example, if the initial transmission power determined/configured for the first uplink transmission is less than the threshold, the first transmission power preferentially allocated by the UE to the first uplink transmission may be the same as the initial transmission power determined/configured for the first uplink transmission.

As an example, the first uplink transmission may include an uplink control channel (PUCCH) including ACK (acknowledgement)/NACK (negative acknowledgment)-based HARQ (hybrid automatic repeat request)-ACK information. And, the second uplink transmission may include PUCCH including NACK only-based HARQ-ACK information.

Here, the ACK/NACK-based HARQ-ACK information may include ACK/NACK-based HARQ-ACK information for a unicast physical downlink shared channel (PDSCH) or ACK/NACK-based HARQ-ACK information for a multicast PDSCH. NACK-only-based HARQ-ACK information may include NACK-only-based HARQ-ACK information for multicast PDSCH.

And, the UE may receive UE-specific downlink control information (DCI) for scheduling the unicast PDSCH and group-common DCI for scheduling the multicast PDSCH.

As another example, separate priority indices may be configured for each of first uplink transmission and second uplink transmission. For example, a first priority may be configured for the first uplink transmission, and a second priority lower than the first priority may be configured for the second uplink transmission. Accordingly, the UE may preferentially allocate the first transmission power to the first uplink transmission with high priority.

The UE may perform the first uplink transmission in a specific TO based on the first transmission power (S720).

For example, after allocating the second transmission power to the first uplink transmission, the UE may allocate the second transmission power to the second uplink transmission. At this time, the sum of the first transmission power and the second transmission power may not exceed the threshold. That is, the UE may allocate the second transmission power to the second uplink transmission within the threshold remaining after excluding the first transmission power.

As another example, the value of the second transmission power may be a value to which a scaling value is applied (for example, a scaling factor predefined or configured by the base station is applied) to the initial transmission power configured/determined for the second uplink.

And, the UE may perform second uplink transmission based on the second transmission power at a specific TO. That is, the UE may perform first uplink transmission and second uplink transmission in a specific TO.

As another example, the UE may drop the initial transmission power of the second uplink transmission. That is, the UE may only perform the first uplink transmission in a specific TO.

FIG. 8 is a diagram for describing an uplink reception operation of a base station in a wireless communication system to which the present disclosure may be applied.

The base station may transmit first control information related to the first uplink transmission and second control information related to the second uplink transmission to the UE (S810).

As an example, the first uplink transmission may include a PUCCH including ACK/NACK-based HARQ-ACK information, and the second uplink transmission may include a PUCCH including NACK-only-based HARQ-ACK information.

ACK/NACK-based HARQ-ACK information may include ACK/NACK-based HARQ-ACK information for unicast PDSCH or ACK/NACK-based HARQ-ACK information for multicast PDSCH. NACK-only-based HARQ-ACK information may include NACK-only-based HARQ-ACK information for multicast PDSCH.

The first control information may include a UE-specific DCI scheduling the unicast PDSCH. And, the second control information may include a group-common DCI for scheduling the multicast PDSCH.

The base station may receive the first uplink transmission from the UE based on the first transmission power at a specific transmission occasion (TO) (S820).

Here, the first uplink transmission and the second uplink transmission may overlap in a specific TO based on the first control information and the second control information. Based on the total transmission power for the first uplink transmission and the second uplink transmission exceeding the threshold, the first transmission power may be preferentially allocated to the first uplink transmission within the threshold. Accordingly, the base station may receive the first uplink transmission based on the first transmission power from the terminal.

The operations and parameters related to the first uplink transmission and the second uplink transmission in FIG. 7 may correspond to the operations and parameters related to the first uplink transmission and the second uplink transmission in FIG. 8, so redundant explanations is omitted.

Hereinafter, a method for transmitting multicast/unicast HARQ-ACK and a method for determining transmission power of PUCCH based on group common/UE-specific DCI will be described in detail.

Embodiment 1

Embodiment 1 relates to a method of transmitting multicast/unicast HARQ-ACK based on group common/UE-specific DCI.

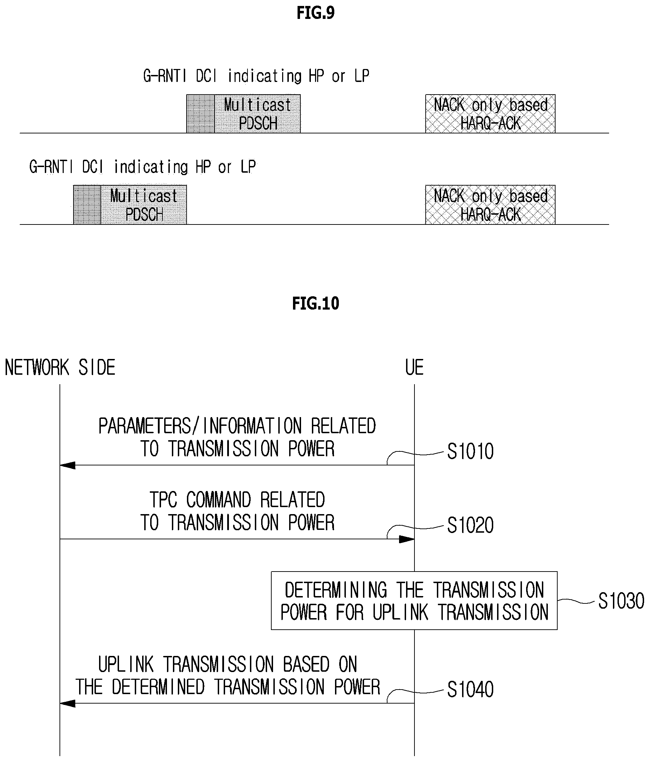

As shown in FIG. 9, the UE may receive a plurality of multicast PDCCH/PDSCH scheduled for different G(group)-RNTIs in FDM or TDM method.

For this purpose, the base station may configure a common frequency resource (CFR), which is a frequency region similar to BWP, and the UE may receive multicast PDCCH/PDSCH through CFR. A UE in connected mode may receive unicast PDCCH/PDSCH by activating one DL BWP. And, the UE may receive multicast PDCCH/PDSCH through the CFR connected to the activated DL BWP.

Afterwards, the UE may transmit one or more multicast HARQ-ACK transmissions for multicast PDCCH/PDSCH through PUCCH. At this time, multicast HARQ-ACKs may be configured to ACK/NACK-based HARQ-ACK or/and NACK only-based HARQ-ACK. That is, the UE may transmit multiple ACK/NACK-based HARQ-ACKs or/and multiple NACK-only-based HARQ-ACKs through one or more PUCCHs.

In the present disclosure, when the NACK-only based HARQ-ACK reported by the UE indicates ACK (i.e., when actual PUCCH transmission is not required), the HARQ-ACK may be determined/regarded as not conflicting with other HARQ-ACKs or SR/CSI reports, etc.

Additionally or alternatively, when NACK-only based HARQ-ACK indicates ACK (i.e., when actual PUCCH transmission is not required), it may be determined/regarded that the corresponding HARQ-ACK is transmitted virtually and may conflict with other HARQ-ACKs or SR/CSI reports, etc. The base station may configure whether to determine that the HARQ-ACK is not actually transmitted or is virtually transmitted.

Embodiment 1-1

When NACK only based HARQ-ACK is configured for a specific PUCCH resource, the base station may configure PUCCH configuration information (e.g., 'RRC IE (information element) PUCCH-config') related to a specific PUCCH resource and transmit it to the UE in a manner described later.

Here, PUCCH configuration information (e.g., 'PUCCH-config') to configure NACK-only based HARQ-ACK may include unicast (or unicast-based) PUCCH configuration information (e.g., 'PUCCH-config') to configure HARQ-ACK transmission for unicast PDSCH transmission or/and multicast (or multicast-based) PUCCH configuration information (e.g., 'PUCCH-config') to configure HARQ-ACK transmission for multicast PDSCH transmission.

For example, when PUCCH-config for multicast is configured for the UE, the UE may select a PUCCH resource according to the configured PUCCH-config for multicast and transmit NACK only based HARQ-ACK based on the selected PUCCH resource.

And, if PUCCH-config for multicast is not configured for the UE, the UE may select a PUCCH resource according to the settings of PUCCH-config for unicast, and may or may not transmit NACK only-based HARQ-ACK using the selected PUCCH resource.

Additionally or alternatively, the base station may separately configure PUCCH-config for ACK/NACK-based multicast and PUCCH-config for NACK only-based multicast for the UE.

Here, if PUCCH-config for NACK only based multicast is configured, the UE may select a PUCCH resource according to the settings of PUCCH-config for NACK only-based multicast and transmit NACK only-based HARQ-ACK based on the selected PUCCH resource.

If PUCCH-config for NACK only based multicast is not configured, the UE may select a PUCCH resource according to the settings of PUCCH-config for ACK/NACK-based multicast, and transmit NACK-only-based HARQ-ACK based on the selected PUCCH resource or not transmit NACK-only-based HARQ-ACK.

And, if PUCCH-config for multicast is not configured, depending on the configurations of PUCCH-config for unicast, PUCCH resources may be selected to transmit NACK only-based HARQ-ACK, or NACK only-based HARQ-ACK may not be transmitted.

Embodiment 1-2

When the UE receives PUCCH configuration information according to Embodiment 1-1, the UE may select a PUCCH resource according to a method described later.

The UE may distinguish NACK-only-based HARQ-ACK and ACK/NACK-based HARQ-ACK using different PRI (PUCCH resource indicator) and PUCCH resource ID (Embodiment 1-2-A).

As an example, information indicating whether NACK-only-based HARQ-ACK is configured for each PUCCH resource may be included (Embodiment 1-2-A-1). For example, configuration information for a specific PUCCH resource (e.g., 'RRC IE PUCCH resource') may include IE PUCCH ID or/and IE indication to NACK only information.

As another example, configuration information for a PUCCH resource set including a specific PUCCH resource (e.g., RRC IE PUCCH resource set/RRC IE PUCCH resource set ID) may include PUCCH resource information for NACK only (IE PUCCH resource for NACK only) or/and PUCCH resource information for ACK/NACK (IE PUCCH resource for ACK/NACK) (Embodiment 1-2-A-2). All of the IEs may be mapped to the same PUCCH resource set ID.

Here, PUCCH resources 0 to 3 selected by PRI may be configured to ACK/NACK based HARQ-ACK, and PUCCH resources 4 to 7 selected by PRI may be configured to NACK only based HARQ-ACK, but is not limited to this.

In the case of Embodiment 1-2-A-2, separate PUCCH resources may be configured for ACK/NACK-based HARQ-ACK and NACK-only-based HARQ-ACK with different PUCCH resource IDs within the same PUCCH resource set.

Additionally or alternatively, NACK only-based HARQ-ACK and ACK/NACK-based HARQ-ACK may be distinguished through a separate indicator included in the DCI (Embodiment 1-2-B).

As an example, it may be configured by RRC signaling so that both ACK/NACK-based HARQ-ACK and NACK only-based HARQ-ACK are possible for the same PUCCH resource ID. Additionally, the DCI may include a separate indicator indicating either ACK/NACK-based HARQ-ACK or NACK only-based HARQ-ACK (Embodiment 1-2-B-1). Accordingly, there is no need to configure whether NACK only-based HARQ-ACK is supported for each PUCCH resource through RRC signaling.

As an example, the base station may set whether to support NACK-only based HARQ-ACK on a per PUCCH configuration information (e.g., 'PUCCH-config') basis or a PUCCH resource set basis. At this time, the UE may assume that all PUCCH resources included in the PUCCH resource configured by 'PUCCH-config' or the PUCCH resource set support NACK-only based HARQ-ACK.

Additionally or alternatively, different PUCCH resource sets in 'PUCCH-config' may be configured to ACK/NACK-based HARQ-ACK, or may be configured to NACK-only-based HARQ-ACK (Embodiment 1-2-B-2).

For example, the RRC IE PUCCH configuration (e.g., 'PUCCH-config') may include at least one of a PUCCH resource set for IE NACK only-based HARQ-ACK or a PUCCH resource set for IE ACK/NACK-based HARQ-ACK.

If the RRC IE PUCCH configuration (e.g., 'PUCCH-config') includes a PUCCH resource set for IE NACK-only based HARQ-ACK, NACK-only based HARQ-ACK may be configured for all PUCCH resources between 0 and 7 indicated through PRI.

And, if the RRC IE PUCCH configuration (e.g., 'PUCCH-config') includes a PUCCH resource set for IE ACK/NACK-based HARQ-ACK, ACK/NACK-based HARQ-ACK may be configured for PUCCH resources between 0 and 7 indicated through PRI.

Additionally or alternatively, different PUCCH configuration information (e.g., 'PUCCH-config') in the PUCCH configuration list information (e.g., 'PUCCH-configurationList') may be configured to ACK/NACK-based HARQ-ACK or NACK-only-based HARQ-ACK (Embodiment 1-2-B-3).

For example, the RRC IE PUCCH configuration information list (e.g., 'PUCCH-configurationList') may include at least one of PUCCH configuration information for IE NACK only-based HARQ-ACK and PUCCH configuration information for IE ACK/NACK-based HARQ-ACK.

If the RRC IE PUCCH configuration information list includes PUCCH configuration information for IE NACK only-based HARQ-ACK, NACK-only based HARQ-ACK may be configured for all PUCCH resources between 0 and 7 indicated through PRI.

And, if the RRC IE PUCCH configuration information list includes PUCCH configuration information for IE ACK/NACK-based HARQ-ACK, ACK/NACK-based HARQ-ACK may be configured for PUCCH resources between 0 and 7 indicated through PRI.

Embodiment 1-3

In a basic wireless system, up to four PUCCH resource sets for ACK/NACK-based HARQ-ACK may be configured considering the payload size. However, one PUCCH resource set for NACK-only-based HARQ-ACK may be sufficient. For example, it may be sufficient to configure only PUCCH resource set 0 for PUCCH format (PF) 0 and PF 1. Therefore, in the above-described embodiment, the UE may determine the PUCCH resource set for NACK-only based HARQ-ACK in the same manner as the embodiment described later.

Hereinafter, a method of determining a PUCCH resource set for NACK-only-based HARQ-ACK from a plurality of PUCCH resource sets configured by the base station will be described.

If NACK-only-based HARQ-ACK and ACK/NACK-based HARQ-ACK share the same PUCCH resource set, in the list of up to four PUCCH resource sets configured by PUCCH configuration information (e.g., 'PUCCH-config'), only the first PUCCH resource set (i.e., PUCCH resource set with PUCCH resource set ID 0) may be configured to NACK-only-based HARQ-ACK (Embodiment 1-3-1).

As another example, even if there is no separate NACK-only-based HARQ-ACK related indication for the first PUCCH resource set, for 'PUCCH-config' for multicast, only NACK-only-based HARQ-ACK may be configured (enabled), or both NACK-only-based HARQ-ACK and ACK/NACK-based HARQ-ACK may be configured (enabled).

As another example, the base station may configure whether the first or specific PUCCH resource is used for NACK-only based HARQ-ACK in a list of up to four PUCCH resource sets in PUCCH configuration information (e.g., 'PUCCH-config') (Embodiment 1-3-2).

As an example, the base station may indicate/configure to the UE whether to use NACK-only based HARQ-ACK through PUCCH configuration information (e.g., 'PUCCH-config') or the first or specific PUCCH resource set within the PUCCH resource set of PUCCH configuration information (e.g., 'PUCCH-config') (Embodiment 1-3-2-1).

As another example, whether the first PUCCH resource set is used for transmission of NACK-only based HARQ-ACK may be indicated through DCI (Example 1-3-2-2).

For example, assume that NACK-only based HARQ-ACK is indicated through a specific DCI. Here, the UE may use the first or specific PUCCH resource set of PUCCH configuration information (e.g., 'PUCCH-config') for NACK only-based HARQ-ACK transmission, and determine/consider that the PUCCH resource indicated by the PRI of the corresponding DCI is the PUCCH resource within the first or specific PUCCH resource set.

As an example, when NACK-only based HARQ-ACK is indicated through DCI, the UE may (always) select the PUCCH resource indicated by the PRI of the DCI from the first PUCCH resource set and transmit NACK-only based HARQ-ACK (Example 1-3-3).

Additionally or alternatively, assume that a specific PUCCH resource set is configured for transmission of NACK-only based HARQ-ACK through PUCCH configuration information (e.g., 'PUCCH-config'). When NACK-only-based HARQ-ACK is indicated through the DCI, the UE may (always) transmit NACK-only-based HARQ-ACK by selecting the PUCCH resource indicated by the PRI of the DCI from a specific PUCCH resource set.

Embodiment 2

Embodiment 2 relates to a method for controlling the power of PUCCH transmission including multicast HARQ-ACK.

FIG. 10 relates to a method of controlling the power of uplink transmission (including NACK-only based HARQ-ACK) according to an embodiment of the present disclosure.

The UE may receive parameters and/or information related to transmission power from the base station (S1010). The terminal may receive parameters and/or information related to transmission power from the base station based on at least one of RRC signaling, MAC CE, or DCI.

As an example, the parameters and/or information related to transmission power may include information for controlling the transmission power of at least one of PUSCH, PUCCH, SRS, or PRACH.

As an example, information for controlling PUSCH transmission power may include at least one of 'PUSCH-ConfigCommon' or 'PUSCH-PowerControl'. Information for controlling SRS transmission power may include at least one of 'SRS-Config' or 'SRS-TPC-CommandConfig'. Information for controlling PRACH transmission power may include 'RACH-ConfigGeneric'.

Additionally, information for controlling PUCCH transmission power may include at least one of 'PUCCH-CopnfigCommon' or 'PUCCH-PowerControl'. As another example, PUCCH configuration information for multicast (e.g., 'PUCCH-config') or PUCCH configuration information for unicast (e.g., 'PUCCH-config') may include 'PUCCH-Power-Control'.

After this, the UE may receive a TPC command related to transmission power from the base station (S1020). Here, the UE may receive the corresponding TPC command from the base station through lower layer signaling (e.g., DCI).

Specifically, the TPC command of PUCCH transmission including ACK/NACK-based HARQ-ACK or NACK only-based HARQ-ACK for multicast PDSCH transmission may receive the TPC command of PUCCH transmission for multicast through a specific DCI. Here, the specific DCI may include at least one of a DCI for scheduling a multicast PDSCH, a DCI for scheduling a unicast PDSCH, or a DCI for scheduling PTP retransmission for multicast.

The UE may extract the TPC command from the received DCI according to the PDCCH configuration information (e.g., 'PDCCH-config') received from the base station. Here, the UE may extract the TPC command according to 'PUCCH-TPC-CommandConfig' included in 'PDCCH-config'.

Here, 'PUCCH-TPC-CommandConfig' may be configured for the UE to extract the TPC command for PUCCH from the group-TPC message on DCI. For example, 'PUCCH-TPC-CommandConfig' may include 'tpc-IndexPCell', 'tpc-IndexPUCCH-SCell', or/and 'tpc-IndexPUCCH-multicast'.

'tpc-IndexPCell' may indicate an index that determines the first bit position of the TPC command (applicable to SpCell) within the DCI format 2-2 payload. 'tpc-IndexPUCCH-SCell' may indicate an index that determines the position of the first bit of the TPC command (applicable to PUCCH SCell) within the DCI format 2-2 payload. 'tpc-IndexPUCCH-multicast' may indicate an index that determines the location of the first bit of the TPC command (applicable to PUCCH for multicast HARQ-ACK) within the DCI format 2-2 payload.

As an example, if the DCI includes a separate TPC command for multicast HARQ-ACK transmission, the base station may include 'tpc-IndexPUCCH-multicast' in 'PUCCH-TPC-CommandConfig'.

Additionally, 'PDCCH-config' may include 'PDCCH-config' included in CFR configuration information or 'PDCCH-config' included in DL BWP configuration information connected to the CFR.

For example, if 'PDCCH-config' included in the CFR configuration information includes 'PUCCH-TPC-CommandConfig', the UE may determine that the TPC command indicated by 'tpc-IndexPCell' and 'tpc-IndexPUCCH-SCell' of the corresponding 'PUCCH-TPC-CommandConfig' is applied to power control of multicast HARQ-ACK transmission.

As another example, assume that 'PDCCH-config' included in the CFR configuration information does not include 'PUCCH-TPC-CommandConfig', and 'PDCCH-config' included in the DL BWP configuration information connected to the CFR includes 'PUCCH-TPC-CommandConfig'. Here, the UE may determine that 'tpc-IndexPCell' and 'tpc-IndexPUCCH-SCell' of the corresponding 'PUCCH-TPC-CommandConfig' are applied to power control of unicast HARQ-ACK transmission. And, the UE may determine that 'tpc-IndexPUCCH-multicast' of the corresponding 'PUCCH-TPC-CommandConfig' is applied to power control of multicast HARQ-ACK transmission.

As another example, if a separate 'tpc-IndexPUCCH-multicast' is not included in the corresponding 'PUCCH-TPC-CommandConfig', the UE may determine that 'tpc-IndexPCell' and 'tpc-IndexPUCCH-SCell' of the corresponding 'PUCCH-TPC-CommandConfig' are applied to power control of both unicast HARQ-ACK transmission and multicast HARQ-ACK transmission.

Hereinafter, the UE may determine (or calculate) the transmission power for uplink transmission based on the parameters, information, and/or TPC command received from the base station (S1030).

For example, the UE may determine the PUCCH transmission power according to Equation 3 below.

【Equation 3】

$$P_{PUCCH,b,f,c}(i,q_u,q_d,l) = \min\left\{ \begin{array}{c} P_{CMAX,f,c}(i), \\ P_{O'PUCCH,b,f,c}(q_u) + 10\log_{10}(2^{\mu} * M_{RB,b,f,c}^{PUCCH}(i)) + PL_{b,f,c}(q_d) + \triangle_{F'PUCCH}(F) + \triangle_{TF,b,f,c}(i) + g_{b,f,c}(i,l) \end{array} \right\}$$

Specifically, when performing PUCCH transmission in the activated UL BWP (b) of the carrier (f) of the primary cell (or secondary cell (c)) using the PUCCH power control adjustment state based on index l, the UE may determine the PUCCH transmission power (dBm) at the PUCCH transmission occasion (i) according to Equation 3.

## Embodiment 2-1

When two or more uplink channels and/or signals are transmitted overlapping (e.g., carrier aggregation situation, etc.), the UE may determine transmission power for uplink transmission by considering priority, etc.

As an example, if the total UE transmit power of the UE for multiple uplink transmissions (e.g., PUSCH, PUCCH, SRS, and/or PRACH transmission, etc.) in each transmission occasion (i) exceeds the threshold, the UE may allocate power to the uplink transmissions according to priority order.

Here, the threshold may include a linear value (e.g., '$\hat{P}_{CMAX}(i)$') of the set terminal transmission power. The linear value of the configured terminal transmission power may mean the configured maximum UE output power.

In addition, the high priority of a specific uplink transmission may mean that the UE preferentially allocates power to the specific uplink transmission within a threshold. As an example, the fact that transmission of HARQ-ACK information for unicast PDSCH has a higher priority than transmission of NACK-only based HARQ-ACK information may mean that the UE allocates power preferentially to transmission of HARQ-ACK information for unicast PDSCH rather than transmission of NACK-only-based HARQ-ACK information.

In addition, the transmission occasion (i.e., transmission time unit) for PUSCH, PUCCH, SRS and/or PRACH may be defined by the slot index (n_s) within the frame of the system frame number (SFN), the first symbol (S) in the slot, the number of consecutive symbols (L), etc.

Hereinafter, examples of priorities related to allocation of transmission power will be described.

As an example, priorities for transmission power control may be configured/defined in the following order: 1) PRACH transmission in PCell, 2) HARQ-ACK information for unicast PDSCH, PUCCH for SR (scheduling request), and/or PUSCH for HARQ-ACK information, 3) HARQ-ACK information based on ACK/NACK for multicast PDSCH, 4) HARQ-ACK information based on NACK only for multicast PDSCH, and 5) PUCCH or PUSCH for CSI.

As another example, the priorities for transmit power control can be set/defined in the following order: 1) PRACH transmission in PCell, 2) HARQ-ACK information for unicast PDSCH, PUCCH for SR (scheduling request), and/or PUSCH for HARQ-ACK information, 3) HARQ-ACK information based on ACK/NACK for multicast PDSCH, 4) HARQ-ACK information based on NACK only for multicast PDSCH, 5) PUCCH or PUSCH for CSI, 6) PUSCH not for HARQ-ACK information or CSI, and 7) SRS transmission or PRACH transmission in a serving cell other than PCell.

Here, among the SRS transmission, aperiodic SRS may have a higher priority than semi-persistent SRS and/or periodic SRS.

As another example, priorities for transmission power control may be configured/defined in the order of 1) PRACH transmission in PCell, 2) HARQ-ACK information for unicast PDSCH, PUCCH for SR (scheduling request), and/or PUSCH for HARQ-ACK information, 3) PUCCH or PUSCH for CSI, 4) PUSCH not for HARQ-ACK information or CSI, 5) SRS transmission or PRACH transmission in a serving cell other than PCell.

As another example, the priorities for transmit power control can be set/defined in the following order: 1) PRACH transmission in PCell, 2) HARQ-ACK information for unicast PDSCH, PUCCH for SR (scheduling request), and/or PUSCH for HARQ-ACK information, 3) NACK-only based HARQ-ACK information for multicast PDSCH, 4) PUCCH or PUSCH for CSI, 5) PUSCH not for HARQ-ACK information or CSI, 6) SRS transmission or PRACH transmission in a serving cell other than PCell.

Additionally or alternatively, the priority of PUCCH or PUSCH for NACK only based HARQ-ACK information for multicast PDSCH may be configured/defined lower than the priority of PUCCH or PUSCH for CSI.

Additionally or alternatively, the priority of PUCCH or PUSCH for NACK-only based HARQ-ACK information for multicast PDSCH may be configured/defined lower than the priority of PSCH that is not for HARQ-ACK information or CSI.

The priority of PUCCH or PUSCH for ACK/NACK-based HARQ-ACK information for multicast PDSCH may be configured/defined lower than the priority of SRS transmission or PRACH transmission in a serving cell other than Pcell.

Additionally or alternatively, the priority of PUCCH or PUSCH for ACK/NACK-based HARQ-ACK information for multicast PDSCH may be configured/defined lower than the priority of PUCCH or PUSCH for CSI.

Additionally or alternatively, the priority of PUCCH or PUSCH for HARQ-ACK information based on ACK/NACK for multicast PDSCH may be configured/defined lower than the priority of PUSCH that is not for HARQ-ACK information or CSI.

Additionally or alternatively, the priority of PUCCH or PUSCH for ACK/NACK-based HARQ-ACK information for multicast PDSCH may be configured/defined lower than the priority of SRS transmission or PRACH transmission in a serving cell other than a Pcell.

Additionally or alternatively, the priority of PUCCH or PUSCH for HARQ-ACK information for high priority (HP) may be configured/defined to be higher than the priority of PUCCH or PUSCH for HARQ-ACK information for low priority (LP).

Additionally or alternatively, the priority of PUCCH or PUSCH for unicast HARQ-ACK information for HP may be configured/defined higher than the priority of PUCCH or PUSCH for multicast HARQ-ACK information for HP.

Additionally or alternatively, the priority of PUCCH or PUSCH for unicast HARQ-ACK information for HP may be configured/defined to be the same as the priority of PUCCH or PUSCH for multicast HARQ-ACK information for HP.

Additionally or alternatively, the priority of PUCCH or PUSCH for unicast HARQ-ACK information for LP may be configured/defined to be higher than the priority of PUCCH or PUSCH for multicast HARQ-ACK information for LP.

Additionally or alternatively, the priority of PUCCH or PUSCH for unicast HARQ-ACK information for LP may be configured/defined to be the same as the priority of PUCCH or PUSCH for multicast HARQ-ACK information for LP.

Additionally or alternatively, the priority of PUCCH or PUSCH for ACK/NACK based HARQ-ACK information for HP may be configured/defined higher than the priority of PUCCH or PUSCH for NACK only based HARQ-ACK information for HP.

Additionally or alternatively, the priority of PUCCH or PUSCH for ACK/NACK based HARQ-ACK information for HP may be configured/defined to be the same as the priority of PUCCH or PUSCH for NACK only based HARQ-ACK information for HP.

Additionally or alternatively, the priority of PUCCH or PUSCH for HARQ-ACK information based on ACK/NACK for LP may be configured/defined higher than the priority of PUCCH or PUSCH for HARQ-ACK information based on NACK only for LP.

Additionally or alternatively, the priority of PUCCH or PUSCH for HARQ-ACK information based on ACK/NACK for LP may be configured/defined to be the same as the priority of PUCCH or PUSCH for HARQ-ACK information based on NACK only for LP.

Through power allocation based on the priority order described above, the UE may control the total transmission power in each symbol of transmission occasion (i) to be less than or equal to the threshold (e.g., linear value of the configured UE transmission power).

As an example, the UE may be configured to scale and/or drop power for uplink transmission with low priority. Here, specific details about scaling and/or drop may be configured/defined according to UE implementation.

As another example, in the case of transmissions with the same priority in carrier aggregation, the UE may regard/consider transmission in the Pcell as a higher priority than transmission in the Scell.

Additionally or alternatively, when transmissions with the same priority are scheduled/established on multiple UL carriers (e.g., two UL carriers), the UE may regard/consider/determine that the priority of the carrier configured for PUCCH transmission for unicast HARQ-ACK is higher than the priority of the carrier configured for PUCCH transmission for multicast HARQ-ACK.

Additionally or alternatively, for transmissions with the same priority on multiple UL carriers (e.g., two UL carriers), the UE may regard/consider/determine that the priority of the carrier configured for PUCCH transmission for ACK/NACK-based HARQ-ACK is higher than the priority of the carrier configured for PUCCH transmission for NACK only-based HARQ-ACK.

Additionally or alternatively, if PUCCH transmission is not established on either carrier, the UE may regard/consider/determine that the priority of transmission on a non-supplementary UL carrier is higher than the priority of transmission on a supplementary UL carrier.

After that, the UE may transmit one or more uplink channels and/or signals (e.g., PUSCH, PUCCH, SRS, PRACH, etc.) to the base station based on the determined (or calculated) transmission power (S1040).

Embodiment 3

Embodiment 3 relates to an interpretation method of DCI's TPC command for multicast HARQ-ACK.

The UE may receive a group common DCI for scheduling multicast PDSCH. The group common DCI may include TPC commands for PRI and scheduled PUCCH. Here, whether the DCI's TPC command is applied to the corresponding PUCCH transmission may be determined depending on which PUCCH configuration information (e.g., 'PUCCH-config') the PUCCH resource is selected.

Embodiment 3-1

When PUCCH configuration information for multicast (e.g., "PUCCH-config") is received, the UE may select the PUCCH resource indicated by the PRI included in the DCI within the PUCCH configuration information for multicast. If PUCCH configuration information for multicast is not received, the UE may select the PUCCH resource indicated by PRI within the PUCCH configuration information for unicast.

As an example, when the PUCCH resource indicated by the PRI is selected within the PUCCH configuration information for multicast, the UE may determine that the TPC command field for PUCCH is included in the DCI. And, the UE may determine the transmission power of the PUCCH resource indicated by PRI according to the DCI's TPC command.

For example, when the PUCCH resource indicated by the PRI is selected in the PUCCH configuration information for unicast, the UE may determine that the TPC command field for PUCCH is not included in the DCI. Additionally, the UE may determine the transmission power of the PUCCH resource indicated by the PRI without considering the TPC command field of the DCI.

As an example, the UE may determine the transmission power of the PUCCH resource indicated by the PRI of the group common DCI based on the TPC command of the most recently received UE-specific DCI. Additionally or alternatively, the UE may determine the transmission power of the PUCCH resource indicated by the PRI of the group common DCI to be the same transmission power as the transmission power of the most recently transmitted PUCCH.

The DCI in Embodiment 3-1 may include a group common DCI or a terminal-specific DCI. At this time, DCI may include DCI format 1_0, DCI format 1_1, or DCI format 1_2. As another example, DCI may include DCI format 2_2 CRC scrambled with TPC-PUCCH-RNTI.

Embodiment 3-2

As an example, assume that a NACK only-based HARQ-ACK is set to be transmitted for the multicast PDSCH scheduled by the group common DCI. Here, if the PUCCH resource indicated by the PRI of the group common DCI is selected within the PUCCH configuration information for unicast (e.g., 'PUCCH-config'), the UE may determine the PUCCH transmission power according to the TPC command for PUCCH included in the DCI.

As another example, if the PUCCH resource indicated by the PRI of the group common DCI is selected within the PUCCH setting information for multicast supporting ACK/NACK-based HARQ-ACK, the UE may determine the PUCCH transmission power according to the TPC command for PUCCH included in the DCI.

Additionally or alternatively, if the PUCCH resource indicated by the PRI of the group common DCI is selected within the PUCCH configuration information for multicast supporting ACK/NACK-based HARQ-ACK, the UE may ignore the TPC command for PUCCH included in the DCI and not apply the TPC command to the transmission power of the NACK only-based PUCCH.

If the PUCCH resource indicated by the PRI of the group common DCI is selected within the PUCCH configuration information for multicast for NACK only-based HARQ-ACK, the UE may ignore the TPC command for PUCCH included in the DCI and not apply the TPC command to the transmission power of the NACK only-based PUCCH.

Additionally or alternatively, if the PUCCH resource indicated by the PRI of the group common DCI is selected within the PUCCH configuration information for multicast for NACK only based HARQ-ACK, the UE may determine the transmission power of NACK only-based PUCCH according to the TPC command for PUCCH included in the DCI.

The DCI of Embodiment 3-2 may include the group common DCI or the terminal-specific DCI. At this time, DCI may include DCI format 1_0, DCI format 1_1, or DCI format 1_2. As another example, DCI may include DCI format 2_2 CRC scrambled with TPC-PUCCH-RNTI.

Embodiment 3-3

For PUCCH resources shared by one or more terminals, the DCI's TPC command may not be applied. And, the DCI's TPC command may be applied to the PUCCH resource dedicated to the terminal.

In particular, whether to apply the TPC command to NACK only-based HARQ-ACK may be configured/indicated by the base station. Accordingly, the presence or absence of a TPC command field for the PUCCH of DCI and the size of the field may be configured by the base station.

As an example, the base station may configure/indicate (via DCI, RRC configurations, or MAC CE) information on whether the TPC command field is included in the DCI and/or field size to the UE.

Additionally or alternatively, the base station may configure/indicate the UE (via DCI, RRC settings, or MAC CE) whether to determine or ignore the PUCCH transmission power according to the TPC command included in the DCI.

The configurations/indications of the base station described above may be applied to PUCCH configuration information for multicast (e.g., 'PUCCH-config') and PUCCH configuration information for unicast (e.g., 'PUCCH-config').

Additionally or alternatively, the configurations/indications of the base station described above may be applied per PUCCH configuration information for HP (e.g., 'PUCCH-config') and PUCCH configuration information for LP (e.g., 'PUCCH-config').

Additionally or alternatively, the above-described base station configurations/indications may be applied to ACK/NACK-based PUCCH configuration information and NACK only-based PUCCH configuration information. Additionally or alternatively, the configuration/indication of the base station described above may be configured per group common DCI and DCI for PTP retransmission.

Additionally or alternatively, the configurations/indications of the base station described above may be applied per G-RNTI, per HARQ process ID, or per DCI format.

The DCI of Embodiment 3-3 may include the group common DCI or the terminal-specific DCI. Here, DCI may include DCI format 1_0, DCI format 1_1, or DCI format 1_2. As another example, DCI may include DCI format 2_2 CRC scrambled with TPC-PUCCH-RNTI.

The UE may decide to ignore or not apply the TPC command in the DCI to a specific DCI format without separate settings/instructions. As an example, when transmitting NACK only-based HARQ-ACK through PUCCH, the UE may decide to ignore the TPC command of DCI format 2_2 or not apply the TPC command to NACK only-based HARQ-ACK transmission power control.

As another example, when transmitting PUCCH through NACK only-based HARQ-ACK, the terminal may decide to apply the TPC command of DCI format 1_x to NACK only-based HARQ-ACK transmission power control.

Embodiment 3-4

Embodiment 3-4 relates to the transmission and reception operation of PUCCH spatial relation Activation/Deactivation MAC CE.

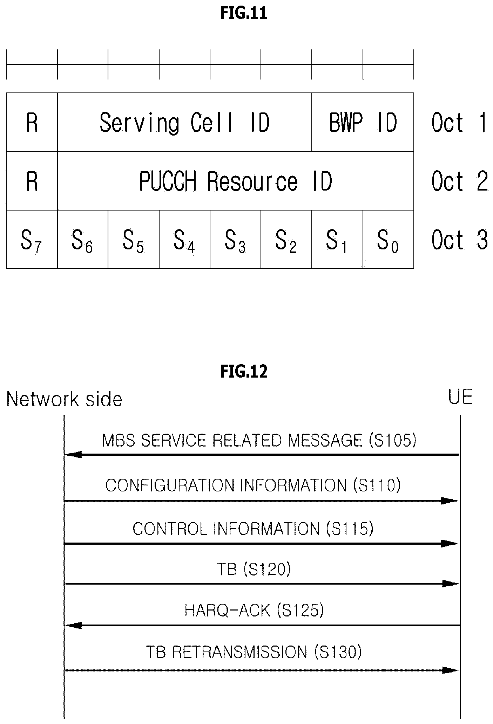

In the PUCCH spatial relationship activation/deactivation MAC CE shown in FIG. 11, the S field may be mapped to one specific PUCCH spatial relation ID information (e.g., 'PUCCH-SpatialRelationInfoId') within the PUCCH configuration information for unicast (e.g., 'PUCCH-Config').

As an example, when the S field is configured/set to 1, activation of PUCCH spatial relation information for 'PUCCH-SpatialRelationInfoId' mapped thereto may be indicated. Here, the UE may determine that the PUCCH resource in the PUCCH resource ID field of the MAC CE is mapped to a reference signal included in the PUCCH spatial relation information.

When the MAC CE shown in FIG. 11 that activates or deactivates the PUCCH spatial relation is received, the UE may activate or deactivate the PUCCH spatial relation of the PUCCH resource for multicast HARQ-ACK according to a method to be described later.

Embodiment 3-4-1

When the PUCCH resource for transmitting multicast HARQ-ACK is determined according to PUCCH configuration information for unicast (e.g., 'PUCCH-config'), the UE may activate or deactivate the PUCCH spatial relation of the PUCCH resource transmitting multicast HARQ-ACK according to the MAC CE shown in FIG. 11.

Here, if the PUCCH resource ID indicated by the PUCCH resource ID field is configured for both unicast HARQ-ACK and multicast HARQ-ACK, the UE may apply the same PUCCH spatial relation information indicated by the MAC CE to both unicast HARQ-ACK transmission and multicast HARQ-ACK transmission.

Additionally, the base station may configure the PUCCH resource ID for multicast HARQ-ACK and the PUCCH resource ID for unicast HARQ-ACK to not be shared. In this case, the UE may determine whether the PUCCH spatial relation indicated by the MAC CE applies only to unicast HARQ-ACK transmission or only to multicast HARQ-ACK transmission, depending on the PUCCH resource ID indicated by the PUCCH resource ID field.

Embodiment 3-4-2

When the PUCCH resource for transmitting multicast HARQ-ACK is determined according to PUCCH configuration information for multicast (e.g., 'PUCCH-config'), the UE may activate or deactivate the PUCCH spatial relation of the PUCCH resource transmitting multicast HARQ-ACK according to the MAC CE shown in FIG. 10.

Here, if the PUCCH resource indicated by the PUCCH resource ID field is used for both unicast HARQ-ACK and multicast HARQ-ACK transmission, the UE may apply the same PUCCH spatial relation indicated by MAC CE only to unicast HARQ-ACK transmission.

Additionally or alternatively, if the PUCCH resource for transmitting multicast HARQ-ACK according to the configurations of the base station is determined according to the PUCCH configuration information for multicast (e.g., 'PUCCH-config'), the UE may also activate or deactivate the PUCCH spatial relation of PUCCH resources transmitting multicast HARQ-ACK according to the MAC CE shown in FIG. 11.

The base station may provide a separate MAC CE to the terminal to activate or deactivate the PUCCH spatial relation. Here, a separate PUCCH spatial relation activation/deactivation MAC CE for multicast may be configured in the same or similar manner as in FIG. 11. However, the MAC PDU may be divided into MAC CE for multicast (activation/deactivation of spatial relationship) and MAC CE for unicast (activation/deactivation of spatial relationship) with different LCID (logical channel ID) values.

Additionally or alternatively, the PUCCH spatial relation for unicast PUCCH and multicast PUCCH may be separately configured for the same PUCCH resource ID with one MAC CE. For example, in the MAC CE structure shown in FIG. 11, a separate PUCCH resource ID field for multicast and a new 2-octet field for S fields may be added under (Oct 3).

Embodiment 3-4-3

Assume that the PUCCH resource for transmitting multicast HARQ-ACK is determined according to PUCCH configuration information for unicast or multicast (e.g., 'PUCCH-config'). Here, the PUCCH spatial relation of PUCCH resources for transmitting multicast HARQ-ACK may be activated or deactivated according to the MAC CE shown in FIG. 11. In addition, the PUCCH spatial relation of PUCCH resources for transmitting multicast HARQ-ACK may be activated or deactivated according to the above-described MAC CE for multicast or MAC CE of a new structure.

Here, the base station may configure the PUCCH resource ID for multicast HARQ-ACK and the PUCCH resource ID for unicast HARQ-ACK to be shared.

FIG. 12 is a diagram for describing the signaling procedure of the network side and the UE according to an embodiment of the present disclosure.

FIG. 12 shows an example of signaling between a network side and a terminal (UE) in a situation where the embodiments (e.g., Embodiment 1, Embodiment 2, Embodiment 3, or a combination of one or more of the detailed Embodiments thereof) of the present disclosure described above may be applied.

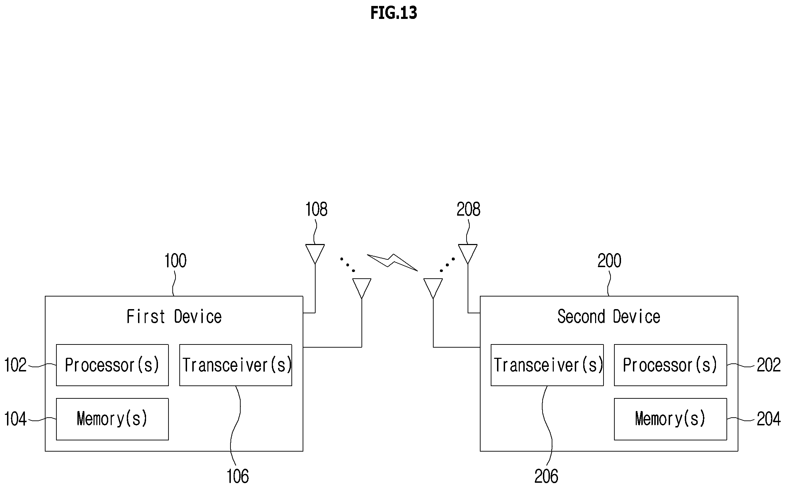

Here, the UE/network side is exemplary and may be applied to various devices as described with reference to FIG. 13. FIG. 12 is for convenience of description, and does not limit the scope of the present disclosure. In addition, some step(s) shown in FIG. 12 may be omitted depending on circumstances and/or settings. In addition, in the operation of the network side / UE of FIG. 12, the above-described uplink transmission/reception operation etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may enter RRC_CONNECTED mode and report a message indicating one or more interested MBS services to the network (S105).

Here, the UE may transmit the message to the network through at least one of a UCI, MAC CE (Control Element), and RRC message. And, the MBS service of interest in the message may mean one of TMGI or G-RNTI listed in the DL message received from the network side.

For example, the DL message may be a service availability message listing TMGI #1, TMGI #3, TMGI #5, and TMGI #10. If the UE is interested in TMGI #5, the UE may indicate the order of TMGI #5 in the message. That is, the UE may report '3' to the network.

As another example, the DL message may be a service availability message listing G-RNTI #1, G-RNTI #3, G-RNTI #5, and G-RNTI #10. If the UE is interested in G-RNTI #10, the UE may indicate the order of G-RNTI #10 in the message. That is, the UE may report '4' to the network.

For example, the operation of the UE (100 or 200 in FIG. 13) in step S105 described above to transmit the message to the network side (200 or 100 in FIG. 13) may be implemented by the device in FIG. 13, which will be described below. For example, referring to FIG. 13, one or more processors 102 may control one or more transceivers 106 and/or one or more memories 104 to transmit the message, and one or more transceivers 106 may transmit the message to the network.

Upon receiving the message, the network side may transmit configuration information to the UE via an RRC message (S110).

For example, the configuration information may include search space configuration information including CFR (common frequency resource) configuration information, one or more group common PDSCH configurations information including TCI state for one or more G-RNTI values, and TCI status for one or more G-RNTI values.

Here, the RRC message may be a group common message transmitted through a PTM Multicast Control Channel (MCCH) or a UE-specific message transmitted through a UE-specific Dedicated Control Channel (DCCH).

And, CFR may include DL CFR and UL CFR. For example, one DL CFR may provide group common PDCCH and group common PDSCH transmission resources for MBS transmission and reception. One UL CFR may provide HARQ-ACK PUCCH resources for group common PDSCH reception. One CFR may be one MBS-specific BWP or one UE-specific BWP. Additionally or alternatively, one or multiple CFRs may be set within one UE-specific BWP. One CFR may have a connection relationship with one terminal-specific BWP.

The UE may be configured with at least a G-RNTI value for each MBS CFR or each serving cell. GC-CS-RNTI may be configured/used to activate(or enable), retransmit or release one or more group common SPS configurations.

If it is not configured with CFR for the UE or GC-CS-RNTI for the serving cell, and CS-RNTI is configured for the CFR or serving cell, the UE may use the CS-RNTI to activate, retransmit, or release one or more group common SPS configurations.

The network side may associate a TMGI list or a G-RNTI list with one GC-CS-RNTI value. At this time, the network side may provide a TMGI list or a G-RNTI list associated with the GC-CS-RNTI value.

Additionally, the configuration information (e.g., 'PDSCH-config') of each PDSCH may be configured as shown in Table 6 with the minimum information elements for multicast and/or broadcast.

[Table 6]

| |
|---|
| PDSCH-Config ::= SEQUENCE { <br> dataScramblingIdentityPDSCH INTEGER (0..1023) OPTIONAL, -- Need S <br> dmrs-DownlinkForPDSCH-MappingTypeA SetupRelease { DMRS-DownlinkConfig } <br> OPTIONAL, -- Need M <br> dmrs-DownlinkForPDSCH-MappingTypeB SetupRelease { DMRS-DownlinkConfig } |

(continued)

```
OPTIONAL, -- Need M
tci-StatesToAddModList SEQUENCE (SIZE(1..maxNrofTCI-States)) OF TCI-State
OPTIONAL, -- Need N
tci-StatesToReleaseList SEQUENCE (SIZE(1..maxNrofTCI-States)) OF TCI-StateId
OPTIONAL, -- Need N
vrb-ToPRB-Interleaver ENUMERATED {n2, n4} OPTIONAL, -- Need S
resourceAllocation ENUMERATED { resourceAllocationType0, resourceAllocationType1, dyna micSwitch},
pdsch-TimeDomainAllocationList SetupRelease { PDSCH-TimeDomainResourceAllocationList } OPTIONAL, --
Need M
pdsch-AggregationFactor ENUMERATED { n2, n4, n8 } OPTIONAL, -- Need S
rateMatchPatternToAdd Mod List SEQUENCE (SIZE (1..maxNrofRateMatchPatterns))
OF RateMatchPattern OPTIONAL, -- Need N
rateMatchPatternToReleaseList SEQUENCE (SIZE (1..maxNrofRateMatchPatterns))
OF RateMatchPatternId OPTIONAL, -- Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 13) in step S110 described above receiving the configuration information from the network side (200 or 100 in FIG. 13) may be implemented by the device in FIG. 11, which will be described below. For example, referring to FIG. 11, one or more processors 102 may control one or more transceivers 106 and/or one or more memories 104 to receive the configuration information, and one or more transceivers 106 may receive the configuration information from a network side. The UE may receive control information from the network (S115). For example, the UE may receive downlink control information (DCI) for scheduling/activating/deactivating uplink/downlink from the network side.

Specifically, if a search space is configured for the configured CFR, the UE may receive CRC scrambled DCI with G-RNTI or G(group)-CS (configured scheduling)-RNTI by monitoring the PDCCH in the SS (search space) set in the configured CFR.

For example, the operation of the UE (100 or 200 in FIG. 13) in step S115 described above receiving the control information from the network side (200 or 100 in FIG. 13) may be implemented by the device in FIG. 13, which will be described below. For example, referring to FIG. 13, one or more processors 102 may control one or more transceivers 106 and/or one or more memories 104 to receive the control information, and one or more transceivers 106 may receive the control information from a network side.

The UE may receive TB from the network side (S120).

Specifically, if a data unit is available on the MTCH of the MBS radio bearer (MRB) for the MBS service, the network side may include a data unit for the SPS PDSCH occasion associated with the MTCH of the MRB for the MBS service, or associated with the TMGI of the MBS service, or associated with the short ID of the MBS service, or may construct the TB associated with the G-RNTI mapped to the MBS service according to the service-to-resource mapping and transmit it to the UE.

For group common dynamic scheduling of TB, the network side may transmit DCI to the UE through PDCCH. The DCI may be CRC scrambled by G-RNTI, G-CS-RNTI, or CS-RNTI. PDCCH may be implemented as a group common PDCCH or a UE-specific PDCCH.

For example, the DCI may include at least one of identifier for DCI format, carrier indicator, bandwidth part indicator, Frequency domain resource assignment, time domain resource allocation, VRB-to-PRB mapping, PRB bundling size indicator, rate matching indicator, ZP CSI-RS trigger, MCS, NDI, RV, HARQ process number, downlink allocation index, TPC command for scheduled PUCCH, PUCCH resource indicator, PDSCH-to-HARQ_feedback timing indicator, antenna port, transmission setup indication, SRS request, DMRS sequence initialization, priority indicator.

For group common dynamic scheduling, by group common or UE specific RRC message or by group common or UE specific MAC CE, the network side may provide the UE with one or more service-resource mappings for MBS services identified by TMGI or G-RNTI or GC-CS-RNTI. Data of the MBS service may be carried through the MBS radio bearer (MRB) of the multicast traffic logical channel, that is, the MTCH associated with the MBS service. The RRC message may be a group common message transmitted through a PTM Multicast Control Channel (MCCH) or a UE-specific message transmitted through a UE-specific Dedicated Control Channel (DCCH). The DCI scheduling PDSCH carrying MBS service data may also indicate one or more of a short ID, MTCH ID, MRB ID, G-RNTI value, and TMGI value for the MBS service.

When the UE receives the CRC scrambled DCI by the G-RNTI it wants to receive, the UE may determine the MBS service(s) associated with one or more of the short ID, MTCH ID, MRB ID, G-RNTI value, and TMGI value for each PDSCH occasion, based on the mapping between the MBS service indicated in the DCI and the HPN and/or the mapping between the MBS service indicated in the DCI and the short ID(s).

Then, if the UE is interested in the determined MBS service(s), the UE may receive the PDSCH transmission scheduled by the DCI. If the UE is not interested in the determined MBS service(s), the UE may not receive the PDSCH transmission scheduled by DCI.

For example, the operation of the UE (100 or 200 in FIG. 13) in step S120 described above to receive the TB from the network side (200 or 100 in FIG. 13) can be implemented by the device in FIG. 13, which will be described below. For example, referring to FIG. 13, one or more processors 102 may control one or more transceivers 106 and/or one or more memories 104 to receive the TB, and one or more transceivers 106 may receive the TB from a network side.

Upon receiving the group common DCI indicating the PUCCH resource for MBS HARQ-ACK, the UE may transmit HARQ-ACK through the PUCCH after receiving the PDSCH scheduled by the DCI (S125). That is, depending on the decoding state of PDSCH transmission, the UE may transmit HARQ feedback to the network.

For PTM scheme 1, the group common DCI may indicate a single PUCCH resource indicator and a single PDSCH-to-HARQ_feedback timing indicator at least for ACK/NACK-based HARQ-ACK.

Specifically, in the case of UE-specific PUCCH resource allocation for ACK/NACK-based HARQ-ACK for group common DCI, Other UEs in the group may be configured to a different value of at least 'PUCCH-Resource' and 'dl-DataToUL-ACK' in the UE-specific 'PUCCH-config' for multicast or unicast (unless 'PUCCH-config' for multicast is configured). Different PUCCH resources may be allocated to different UEs by the same PUCCH resource indicator and the same PDSCH-to-HARQ_feedback timing indicator of the group common DCI.

For PTP retransmission, in a UE-specific DCI, the PUCCH resource indicator and PDSCH-to-HARQ_feedback timing indicator may be interpreted based on 'PUCCH-config' for unicast regardless of whether 'PUCCH-config' for multicast is configured.

Here, PRI (PUCCH Resource Indicator) may be indicated by the group common DCI, as will be described later.

As an example, a UE-specific PRI list may be included in the DCI (Option 1A-1). Each PRI in that list may indicate an entry corresponding to the candidate 'pucch-ResourceId' value of 'PUCCH-config' for allocation of the same PUCCH resource or different PUCCH resources for different UEs in the group that received the same DCI. Different PRIs in the DCI can point to different entries in 'PUCCH-config'.

Here, the candidate 'pucch-ResourceId' value may be configured by RRC, and a different 'pucch-ResourceId' value may be configured for other UEs of the same group at least in multicast 'PUCCH-config'.

As another example, a group common PRI may be included in the DCI (Option 1A-2). A single group common PRI may indicate a specific entry for a candidate 'pucch-ResourceId' value in the UE-specific 'PUCCH-config' for allocation of the same or different PUCCH resources for all UEs in the group.

And, the candidate 'pucch-ResourceId' value may be configured by RRC. At least in 'PUCCH-config' for multicast, different 'pucch-ResourceId' values may be configured for different UEs in the same group.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

K1 (PDSCH-to-HARQ_feedback timing indicator) may be indicated by the group common DCI, as will be described later.

As an example, a list of UE-specific K1 values may be included in the DCI (Option 1B-1). Each K1 in the list may indicate the same UL slot or a different UL (sub)slot for other terminals in the group.

For example, different K1 values are assigned to different UEs. That is, a K1 value may be assigned to UE 1, a K2 value may be assigned to UE 2, and a K3 value may be assigned to UE 3.

As another example, the K1 value may be shared by multiple UEs. For example, UE 1 and UE 2 may share the K1 value, and UE 3 and UE 4 may share the K2 value.

As another example, one K1 value may be a reference, and another K1 value may be assigned based on that reference. {List of K1_ref, K1_offset} may be indicated in DCI.

For example, UE 1 may use K1_ref, UE 2 may use K1_ref + K1_offest1, and UE 3 may use K1_ref + K1_offest2.

As another example, a group common K1 value may be included in the DCI (Option 1B-2). For example, a single K1 value may be the same for all UEs in a group receiving DCI, or may indicate a corresponding entry for the candidate 'dl-DataToUL-ACK' value in the UE-specific 'PUCCH-config' for different PUCCH resource allocation. This can be applied when the DCI format is configured in the UE-specific 'PUCCH-config' for the K1 value.

As another example, the candidate 'dl-DataToUL-ACK' value is configured by RRC and may be configured differently for other UEs of the same group at least in 'PUCCH-config' for multicast.

As another example, if 'PUCCH-config' for multicast is configured for HARQ-ACK for grouping common PDSCH scheduled by group common DCI, the UE may assume that the K1 value of the group common DCI indicates the corresponding entry for the candidate 'dl-DataToUL-ACK' value in 'PUCCH-config' for multicast.

As another example, if 'PUCCH-config' for multicast is not configured for HARQ-ACK to group common PDSCH scheduled by group common DCI, the UE may assume that the K1 value of the group common DCI indicates an entry corresponding to the candidate 'dl-DataToUL-ACK' value in 'PUCCH-config' for unicast.

In addition, upon receiving the group common DCI CRC scrambled by the G-RNTI and/or the terminal-specific DCI CRC scrambled by the C-RNTI, if Type-1 HARQ-ACK codebook is configured for 'PUCCH-config' for multicast and/or 'PUCCH-config' for unicast, the UE may configure TDRA (Time Domain Resource Allocation) to generate a type-1 HARQ-ACK codebook for HARQ-ACK(s) to group common PDSCH scheduled by group common DCI and/or UE-specific PDSCH scheduled by UE-specific DCI.

If TB decoding is not successful in the PDSCH transmission occasion, the UE may transmit HARQ NACK to the base station through PUCCH resources in the configured UL CFR.

By using PUCCH resources, the UE may transmit HARQ-ACK to other PDSCH transmissions, such as unicast SPS PDSCH, dynamic unicast PDSCH, PTP retransmission, and/or dynamic group common PDSCH.

Here, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the above-described options.

If the RSRP threshold is configured, the UE may use NACK-only based HARQ-ACK based NACK based on the RSRP of the measured serving cell. If the measured RSRP is higher than the threshold, NACK-only-based HARQ-ACK may be transmitted through the group common PUCCH resource indicated by the DCI's PRI. If the measured RSRP is lower than the threshold, NACK-only-based HARQ-ACK can be changed to ACK/NACK-based HARQ-ACK on the UE-specific PUCCH resource indicated by the PRI of the DCI.

Meanwhile, when 'pdsch-AggregationFactor' is configured for G-RNTI or 'repeat_number' is indicated by DCI from the network side, TB scheduled by group common DCI, if configured, may be repeated for the Nth HARQ transmission of the TB within each symbol allocation between each 'pdsch-AggregationFactor' consecutive slot or between each 'repeat_number' consecutive slot.

For example, the operation of the UE (100 or 200 in FIG. 13) in step S125 described above to transmit the HARQ-ACK from the network side (200 or 100 in FIG. 13) may be implemented by the device in FIG. 13, which will be described below. For example, referring to FIG. 13, one or more processors 102 may control one or more transceivers 106 and/or one or more memories 104 to transmit the HARQ-ACK, and one or more transceivers 106 may transmit the HARQ-ACK from a network side.

The network side that has received the HARQ NACK in the TCI state may retransmit the PDCCH and PDSCH using the TCI state in the DL CFR configured for retransmission of the TB (S130).

The UE may monitor the group common and/or UE-specific PDCCH using the TCI state for the search space configured in the DL CFR to receive retransmission of the TB. The network side may retransmit the TB to one of the UEs in the group by UE-specific PDCCH. However, since the other UE successfully received the TB, it may not receive the TB retransmission.

When the UE receives the PDCCH for retransmission of the TB, the UE may receive the PDSCH scheduled by the DCI of the PDCCH. If the UE successfully decodes TB from PDSCH, the UE may consider the decoded TB to be associated with short ID for MTCH, MRB, TMGI, G-RNTI and/or MBS services based on the mapping between the MBS service indicated by the DCI and the HPN (HARQ process number), and/or the mapping between the MBS service indicated by the DCI and the short ID(s).

If TB decoding is successful at the PDSCH transmission occasion, the UE may transmit HARQ ACK to the network through PUCCH resources in the UL CFR configured according to the above-described procedure. Using the PUCCH resource, the UE may transmit HARQ-ACK to other PDSCH transmissions, such as unicast SPS PDSCH, dynamic unicast PDSCH, PTP retransmission, and/or dynamic group common PDSCH.

In this case, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the options/embodiments described above.

For example, the operation of the UE (100 or 200 in FIG. 13) in step S130 described above receiving a TB retransmission from the network side (200 or 100 in FIG. 13) may be implemented by the device in FIG. 13, which will be described below. For example, referring to FIG. 13, one or more processors 102 may control one or more transceivers 106 and/or one or more memories 104, etc. to receive the TB retransmission, and one or more transceivers 106 may receive the TB retransmission from a network side.

General Device to which the Present Disclosure may be applied

FIG. 13 illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission by a user equipment (UE) in a wireless communication system, the method comprising:

    based on total transmission power for first uplink transmission and second uplink transmission exceeding a threshold, allocating first transmission power to the first uplink transmission preferentially within the threshold; and
    performing the first uplink transmission at a specific transmission occasion (TO) based on the first transmission power,
    wherein the first uplink transmission and the second uplink transmission are overlapped in the specific TO,
    wherein the first uplink transmission includes a physical uplink control channel (PUCCH) including acknowledgment (ACK)/negative acknowledgment (NACK)-based hybrid automatic repeat request (HARQ)-ACK information, and
    wherein the second uplink transmission includes a PUCCH including NACK only based HARQ-ACK information.

2. The method of claim 1, wherein:
   the ACK/NACK-based HARQ-ACK information includes ACK/NACK-based HARQ-ACK information for a unicast physical downlink shared channel (PDSCH) or ACK/NACK-based HARQ-ACK information for a multicast PDSCH.

3. The method of claim 2, wherein:
   the NACK-only-based HARQ-ACK information includes NACK-only-based HARQ-ACK information for multicast PDSCH.

4. The method of claim 3, wherein:
   UE-specific downlink control information (DCI) for scheduling the unicast PDSCH and group-common DCI for scheduling the multicast PDSCH are received from the base station.

5. The method of claim 1, wherein:

a first priority is configured for the first uplink transmission, and
a second priority lower than the first priority is configured for the second uplink transmission.

6. The method of claim 1, wherein:

a second transmission power is allocated for the second uplink transmission,
the second uplink transmission is performed in the specific TO based on the second transmission power, and
a sum of the first transmission power and the second transmission power does not exceed the threshold.

7. The method of claim 6, wherein:
a value of the second transmission power is a value obtained by applying scaling to an initial transmission power of the second uplink transmission.

8. The method of claim 1, wherein:
the initial transmission power of the second uplink transmission is dropped.

9. The method of claim 1, wherein:
the threshold includes a linear value of a maximum output power of the UE configured at the specific TO.

10. The method of claim 1, wherein:
the specific TO includes a specific slot or specific symbol in which the first uplink transmission and the second uplink transmission are performed.

11. The method of claim 1, wherein:
the first uplink transmission and the second uplink transmission overlap at the specific TO in a plurality of cells with carrier aggregation.

12. A user equipment (UE) performing uplink transmission in a wireless communication system, the UE comprising:

at least one transceiver; and
at least one processor coupled to the at least one transceiver;
wherein the at least one processor is configured to:

based on total transmission power for first uplink transmission and second uplink transmission exceeding a threshold, allocate first transmission power to the first uplink transmission preferentially within the threshold; and
perform the first uplink transmission at a specific transmission occasion (TO) based on the first transmission power,
wherein the first uplink transmission and the second uplink transmission are overlapped in the specific TO,
wherein the first uplink transmission includes a physical uplink control channel (PUCCH) including acknowledgment (ACK)/negative acknowledgment (NACK)-based hybrid automatic repeat request (HARQ)-ACK information, and
wherein the second uplink transmission includes a PUCCH including NACK only based HARQ-ACK information.

13. A method of performing uplink reception by a base station in a wireless communication system, the method comprising:

transmitting, to a user equipment (UE), first control information related to first uplink transmission and second control information related to second uplink transmission; and
receiving, from the UE, the first uplink transmission based on first transmission power at a specific transmission occasion (TO),
based on the total transmission power for the first uplink transmission and the second uplink transmission exceeding a threshold, the first transmission power is preferentially allocated to the first uplink transmission within the threshold,
wherein the first uplink transmission and the second uplink transmission are overlapped in the specific TO,
wherein the first uplink transmission includes a physical uplink control channel (PUCCH) including acknowledgment (ACK)/negative acknowledgment (NACK)-based hybrid automatic repeat request (HARQ)-ACK information, and

wherein the second uplink transmission includes a PUCCH including NACK only based HARQ-ACK information.

14. A base station performing uplink reception in a wireless communication system, the base station comprising:

at least one transceiver; and
at least one processor coupled to the at least one transceiver;
wherein the at least one processor is configured to:

transmit, to a user equipment (UE) through the at least one transceiver, first control information related to first uplink transmission and second control information related to second uplink transmission; and
receive, from the UE through the at least one transceiver, the first uplink transmission based on first transmission power at a specific transmission occasion (TO),
based on the total transmission power for the first uplink transmission and the second uplink transmission exceeding a threshold, the first transmission power is preferentially allocated to the first uplink transmission within the threshold,
wherein the first uplink transmission and the second uplink transmission are overlapped in the specific TO,
wherein the first uplink transmission includes a physical uplink control channel (PUCCH) including acknowledgment (ACK)/negative acknowledgment (NACK)-based hybrid automatic repeat request (HARQ)-ACK information, and
wherein the second uplink transmission includes a PUCCH including NACK only based HARQ-ACK information.

15. A processing device configured to control a user equipment (UE) to perform uplink reception in a wireless communication system, the processing device comprising:

at least one processor; and
at least one computer memory operatively coupled to the at least one processor and storing instructions for performing operations upon being executed by the at least one processor,
wherein the operations comprise:

based on total transmission power for first uplink transmission and second uplink transmission exceeding a threshold, allocating first transmission power to the first uplink transmission preferentially within the threshold; and
performing the first uplink transmission at a specific transmission occasion (TO) based on the first transmission power,
wherein the first uplink transmission and the second uplink transmission are overlapped in the specific TO,
wherein the first uplink transmission includes a physical uplink control channel (PUCCH) including acknowledgment (ACK)/negative acknowledgment (NACK)-based hybrid automatic repeat request (HARQ)-ACK information, and
wherein the second uplink transmission includes a PUCCH including NACK only based HARQ-ACK information.

16. At least one non-transitory computer readable medium storing at least one instruction, wherein:

the at least one instruction executed by at least one processor controls a device which performs uplink transmission in a wireless communication system to perform:
based on total transmission power for first uplink transmission and second uplink transmission exceeding a threshold, allocating first transmission power to the first uplink transmission preferentially within the threshold; and
performing the first uplink transmission at a specific transmission occasion (TO) based on the first transmission power,
wherein the first uplink transmission and the second uplink transmission are overlapped in the specific TO,
wherein the first uplink transmission includes a physical uplink control channel (PUCCH) including acknowledgment (ACK)/negative acknowledgment (NACK)-based hybrid automatic repeat request (HARQ)-ACK information, and
wherein the second uplink transmission includes a PUCCH including NACK only based HARQ-ACK information.

# FIG.1

# FIG.2

**FIG.3**

**FIG.4**

**FIG.5**

Resource grid — A carrier (up to 3300 subcarriers, i.e., 275 RBs), A BWP, 1 RB=12 subcarrier, 1 RE, 1 subcarrier, 1 Symbol, l=0, k=0

**FIG.6**

| INITIAL CELL SEARCH | SYSTEM INFORMATION RECEPTION | RANDOM ACCESS PROCEDURE | | | | GENERAL DL/UL Tx/Rx | |
|---|---|---|---|---|---|---|---|
| PSS/SSS& [DL RS]& PBCH | PDCCH/PDSCH (BCCH) | PRACH | PDCCH/PDSCH | PUSCH | PDCCH/PDSCH | PDCCH/PDSCH | PUSCH/PUCCH |
| S601 | S602 | S603 | S604 | S605 | S606 | S607 | S608 |

· DL/UL ACK/NACK
· UE CQI/PMI RI REPORT
  USING PUSCH AND PUCCH

**FIG.7**

BASED ON THE TOTAL TRANSMISSION POWER FOR THE FIRST UPLINK TRANSMISSION AND THE SECOND UPLINK TRANSMISSION EXCEEDING THE THRESHOLD, PREFERENTIALLY ALLOCATING THE FIRST TRANSMISSION POWER TO THE FIRST UPLINK TRANSMISSION WITHIN THE THRESHOLD — S710

PERFORMING THE FIRST UPLINK TRANSMISSION IN A SPECIFIC TO BASED ON THE FIRST TRANSMISSION POWER — S720

**FIG.8**

TRANSMITTING FIRST CONTROL INFORMATION RELATED TO THE FIRST UPLINK TRANSMISSION AND SECOND CONTROL INFORMATION RELATED TO THE SECOND UPLINK TRANSMISSION TO THE UE — S810

RECEIVING THE FIRST UPLINK TRANSMISSION FROM THE UE BASED ON THE FIRST TRANSMISSION POWER AT A SPECIFIC TO — S820

**FIG.9**

G-RNTI DCI indicating HP or LP

| Multicast PDSCH | | NACK only based HARQ-ACK |

G-RNTI DCI indicating HP or LP

| Multicast PDSCH | | NACK only based HARQ-ACK |

**FIG.10**

NETWORK SIDE                                 UE

PARAMETERS/INFORMATION RELATED
TO TRANSMISSION POWER — S1010

TPC COMMAND RELATED
TO TRANSMISSION POWER — S1020

DETERMINING THE TRANSMISSION
POWER FOR UPLINK TRANSMISSION — S1030

UPLINK TRANSMISSION BASED ON
THE DETERMINED TRANSMISSION POWER — S1040

**FIG.11**

| R | Serving Cell ID | | BWP ID | Oct 1 |
|---|---|---|---|---|
| R | PUCCH Resource ID | | | Oct 2 |
| $S_7$ | $S_6$ $S_5$ $S_4$ | $S_3$ $S_2$ | $S_1$ $S_0$ | Oct 3 |

**FIG.12**

Network side                                                    UE

MBS SERVICE RELATED MESSAGE (S105)

CONFIGURATION INFORMATION (S110)

CONTROL INFORMATION (S115)

TB (S120)

HARQ-ACK (S125)

TB RETRANSMISSION (S130)

FIG.13

EP 4 412 322 A1

| INTERNATIONAL SEARCH REPORT | International application No. |
|---|---|
| | **PCT/KR2022/014785** |

**A. CLASSIFICATION OF SUBJECT MATTER**

**H04W 52/32**(2009.01)i; **H04W 52/14**(2009.01)i; **H04W 52/54**(2009.01)i; **H04L 1/18**(2006.01)i

According to International Patent Classification (IPC) or to both national classification and IPC

**B. FIELDS SEARCHED**

Minimum documentation searched (classification system followed by classification symbols)

H04W 52/32(2009.01); H04W 52/14(2009.01); H04W 52/34(2009.01); H04W 52/56(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 전송(uplink transmission), 전송 전력(transmission power), 임계값 (threshold), 우선(priority), 중첩(overlap), HARQ(hybrid automatic repeat request)

**C. DOCUMENTS CONSIDERED TO BE RELEVANT**

| Category* | Citation of document, with indication, where appropriate, of the relevant passages | Relevant to claim No. |
|---|---|---|
| A | KR 10-2018-0008711 A (SAMSUNG ELECTRONICS CO., LTD.) 24 January 2018 (2018-01-24)<br>See paragraphs [0128] and [0247]-[0254]; claim 1; and figure 3. | 1-16 |
| A | WO 2019-172624 A1 (LG ELECTRONICS INC.) 12 September 2019 (2019-09-12)<br>See claims 1-3 and 13-14. | 1-16 |
| A | KR 10-2019-0103388 A (HUAWEI TECHNOLOGIES CO., LTD.) 04 September 2019 (2019-09-04)<br>See paragraphs [0147]-[0170]; and figure 2. | 1-16 |
| A | SAMSUNG. Corrections on Ultra Reliable Low Latency Communications Enhancements. R1-2005140, 3GPP TSG-RAN WG1 Meeting #101-e, e-Meeting. 13 June 2020.<br>See section 7.5. | 1-16 |
| A | KR 10-2016-0107293 A (CHINA ACADEMY OF TELECOMMUNICATIONS TECHNOLOGY) 13 September 2016 (2016-09-13)<br>See paragraphs [0274]-[0280]; and figure 1. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 January 2023** | **18 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| KR | 10-2018-0008711 | A | 24 January 2018 | CN | 106304299 | A | 04 January 2017 |
| | | | | CN | 114095996 | A | 25 February 2022 |
| | | | | KR | 10-2487047 | B1 | 11 January 2023 |
| | | | | US | 10264533 | B2 | 16 April 2019 |
| | | | | US | 10448340 | B2 | 15 October 2019 |
| | | | | US | 10631250 | B2 | 21 April 2020 |
| | | | | US | 10972986 | B2 | 06 April 2021 |
| | | | | US | 2018-0139701 | A1 | 17 May 2018 |
| | | | | US | 2019-0246358 | A1 | 08 August 2019 |
| | | | | US | 2020-0045643 | A1 | 06 February 2020 |
| | | | | US | 2020-0245258 | A1 | 30 July 2020 |
| | | | | WO | 2016-186395 | A1 | 24 November 2016 |
| WO | 2019-172624 | A1 | 12 September 2019 | US | 11412461 | B2 | 09 August 2022 |
| | | | | US | 2021-0368453 | A1 | 25 November 2021 |
| KR | 10-2019-0103388 | A | 04 September 2019 | BR | 112019014890 | A2 | 03 March 2020 |
| | | | | CN | 108347760 | A | 31 July 2018 |
| | | | | CN | 108347760 | B | 08 June 2021 |
| | | | | EP | 3562221 | A1 | 30 October 2019 |
| | | | | EP | 3562221 | A4 | 25 December 2019 |
| | | | | EP | 3562221 | B1 | 03 March 2021 |
| | | | | JP | 2020-506594 | A | 27 February 2020 |
| | | | | US | 11032778 | B2 | 08 June 2021 |
| | | | | US | 2019-0342839 | A1 | 07 November 2019 |
| | | | | WO | 2018-133839 | A1 | 26 July 2018 |
| KR | 10-2016-0107293 | A | 13 September 2016 | CN | 104812046 | A | 29 July 2015 |
| | | | | CN | 104812046 | B | 05 March 2019 |
| | | | | EP | 3101960 | A1 | 07 December 2016 |
| | | | | EP | 3101960 | A4 | 28 December 2016 |
| | | | | EP | 3101960 | B1 | 21 October 2020 |
| | | | | JP | 2017-505061 | A | 09 February 2017 |
| | | | | JP | 6847662 | B2 | 24 March 2021 |
| | | | | TW | 201531129 | A | 01 August 2015 |
| | | | | TW | I545984 | B | 11 August 2016 |
| | | | | US | 10716069 | B2 | 14 July 2020 |
| | | | | US | 2016-0353387 | A1 | 01 December 2016 |
| | | | | WO | 2015-113486 | A1 | 06 August 2015 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- physical channels and modulation. *3GPP LTE, TS 36.211*
- multiplexing and channel coding. *TS 36.212*
- physical layer procedures. *TS 36.213*
- overall description. *TS 36.300*
- radio resource control. *TS 36.331*
- physical channels and modulation. *3GPP NR, TS 38.211*
- multiplexing and channel coding. *TS 38.212*
- physical layer procedures for control. *TS 38.213*
- physical layer procedures for data. *TS 38.214*
- NR and NG-RAN(New Generation-Radio Access Network) overall description. *TS 38.300*
- radio resource control protocol specification. *TS 38.331*